# FASCICULE DE BREVET EUROPEEN

(11) **EP 0 823 317 B1**
(45) Date de publication et mention de la délivrance du brevet: **13.10.2004**
(21) Numéro de dépôt: 97401835.0
(22) Date de dépôt: 31.07.1997
(51) Int. Cl.: B29C 43/18, B29C 43/38, B29C 70/76

(54) **Poinçon de formage et procédé pour le postformage d'un cordon profilé extrudé sur un objet**
Formstempel und Verfahren zum Nachformen einer extrudierten Profilleiste auf einem Gegenstand
Forming die and process for postforming an extruded profiled strip onto an article

(30) Priorité: 09.08.1996 DE 19632149
(43) Date de publication de la demande: 11.02.1998
(73) Titulaire: SAINT-GOBAIN GLASS FRANCE, 92400 Courbevoie (FR)
(72) Inventeur: Kittel, Florenz, 52146 Würselen (DE); Krumm, Helmut, 52074 Aachen (DE)
(74) Mandataire: Le Cam, Stéphane Georges Elie

(56) Documents cités:
- EP-A- 0 297 739
- EP-A- 0 723 846
- DE-A- 2 365 723
- DE-A- 2 611 255
- US-A- 5 316 829

## Description

La présente invention concerne un poinçon de formage pour le postformage d'un cordon profilé en polymère extrudé sur un objet.

Il est connu de pourvoir des vitrages automobiles d'un cadre ou d'éléments en forme de cadre en extrudant directement sur un vitrage un cordon profilé de manière correspondante en un polymère extrudable. D'autres objets en forme de plaque également, comme par exemple des portières, peuvent être pourvues de cette manière d'un joint d'étanchéité en forme de cadre. Le cordon profilé extrudé sur l'objet doit néanmoins être, en règle générale, postformé en des endroits déterminés, par exemple dans la zone de la transition entre le début et la fin d'un cadre fermé. Un tel postformage peut également être nécessaire ou avantageux dans la zone des coins d'un cadre profilé, en particulier lorsqu'il s'agit de coins vifs.

Comme polymères extrudables, on utilise aux fins mentionnées, tant des systèmes à réaction, par exemples des systèmes à polyuréthanne durcissant sous l'effet de l'humidité, que des systèmes polymériques thermoplastiques. Dans le cas des systèmes à réaction, le postformage peut se produire directement à la suite de l'opération d'extrusion avant le durcissement du cordon polymérique extrudé. Un tel processus de postformage et les moules de compression appropriés pour ce faire sont décrits dans les documents EP-B1 0 421 833 et DE-G-U1 90 11 573. Le postformage peut aussi, dans le cas d'un système à réaction, être entrepris après le durcissement du cordon profilé. Un procédé correspondant et un moule approprié pour ce faire, comportant un poinçon de formage, font l'objet des documents EP-B1 0 524 060 et EP-A1 0 723 846.

Des dispositifs comportant un poinçon de formage pour le postformage de la zone de transition d'un cadre en polymère thermoplastique extrudé sur un vitrage sont décrits dans les documents DE-C2 44 21 299 et DE-A1 44 45 258.

Dans tous les dispositifs connus pour le postformage, la surface façonnante du poinçon de formage est adaptée sur toute sa longueur à la géométrie du cordon profilé extrudé. Cela signifie que la surface de formage profilée, par exemple dans le cas d'un cadre extrudé sur un vitrage plan, est de forme rectiligne.

Lors du postformage à l'aide du poinçon de formage connu, il peut arriver que des lignes de joint, qui sont provoquées par les arêtes de limitation au niveau des faces d'about du poinçon de formage, soient visibles aux endroits de transition entre la longueur de profilé postformée et les longueurs de profilés extrudées initiales. De telles lignes de joint visibles apparaissent en particulier lorsque les dimensions en hauteur du cordon profilé extrudé ou la forme et l'épaisseur de l'objet varient légèrement dans les limites des tolérances données.

L'invention a pour but de procurer un outil du type mentionné dans le préambule pour le postformage localisé d'un cordon profilé extrudé sur un objet, dans lequel la création de lignes de joint visibles entre la zone postformée et le cordon profilé adjacent soit évitée.

Ce but est atteint selon l'invention par le fait que la surface de formage du poinçon de formage est recourbée, au moins dans les zones d'extrémité latérales dans le sens de la longueur du cordon profilé.

L'importance de la courbure doit, dans ce cas, être choisie telle que les arêtes de délimitation latérales de la surface de formage ne soient plus en contact, dans la position finale du poinçon lors de l'opération de postformage, avec la surface du cordon profilé, même dans le cas d'une épaisseur du cordon profilé située à la limite supérieure du domaine de tolérance, mais se trouvent nettement au-dessus de cette surface. Il s'est avéré que cette condition est, en règle générale, satisfaite lorsque la différence de hauteur entre les zones du poinçon de formage, adjacentes à la surface de l'objet, et les arêtes correspondantes de la surface de formage au niveau des faces d'about du poinçon de formage est de 0,1 à 1 mm, et de préférence de 0,2 à 0,6 mm. De cette façon, aucune empreinte en forme de ligne ou d'arête n'est formée, mais, dans chaque cas, apparaît une transition graduelle continue entre la longueur postformée et les longueurs de cordon profilé qui s'y raccordent. Cette transition graduelle n'est, dans la plupart des cas, pas visible à l'oeil nu, et le cordon profilé présente aussi dans cette zone postformée un aspect homogène.

Suivant un développement avantageux de l'invention, la surface de formage du poinçon de formage est pourvue sur toute sa longueur, d'une courbure constante. Dans le cas d'un tel poinçon de formage d'une longueur de par exemple 8 cm, tel qu'il est approprié pour le postformage de la zone de transition entre le début et la fin d'un cordon profilé, une différence de hauteur de 0,5 mm entre les arêtes de la surface de formage et le point le plus bas est atteinte lorsque le rayon de la courbure circulaire de la surface de formage vaut environ 1500 mm. De tels poinçons de formage, présentant le même rayon de courbure sur toute leur longueur, peuvent être plus facilement fabriqués pour des raisons techniques que des poinçons de formage comportant uniquement des zones d'extrémité recourbées. La zone d'un cordon profilé postformée à l'aide d'un tel poinçon de formage présente un aspect homogène et n'accuse aucune discontinuité dans la surface postformée.

Les poinçons de formage conçus selon l'invention peuvent être utilisés pour tous les procédés de postformage connus avec le même avantage, puisque la difficulté fondamentale est en principe observée dans le cas de tous les procédés de postformage décrits dans le préambule. L'invention a aussi pour objet un procédé de postformage utilisant un poinçon conçu selon l'invention.

D'autres particularités et avantages de l'invention ressortiront des revendications dépendantes et de la description suivante d'exemples de réalisation à l'appui des dessins annexés.

Dans les dessins :
- la figure 1 est une représentation schématique en coupe transversale d'un outil pour le postformage d'un cordon profilé thermoplastique,
- la figure 2 est une vue en coupe longitudinale dans le plan ll-ll de la figure 1,
- la figure 3 est une représentation en perspective d'un poinçon de formage suivant l'invention pour l'outil représenté sur la figure 1, et
- la figure 4 montre un dispositif selon l'invention pour le postformage d'un cadre polymérique dans la zone de coin d'un vitrage par un procédé de moulage par injection.

Sur le bord d'un vitrage 1, est extrudé un cordon profilé 2, qui présente une lèvre d'étanchéité et de centrage 3 faisant saillie au-delà du bord du vitrage 1. Dans la zone de transition entre le début et la fin du cordon profilé extrudé 2, 3, le cordon profilé doit être postformé. Dans le cas représenté, le cordon profilé 2, 3 est fait d'un élastomère thermoplastique. Pour le postformage, on utilise dans ce cas un poinçon de formage 5 chauffé. Pour le postformage de la lèvre 3, le poinçon de formage 5 coopère avec une matrice 6 correspondante, qui est pourvue d'une cavité 7, dans laquelle le bord du vitrage 1 est introduit.

En vue du postformage, le poinçon de formage 5 est abaissé sur le cordon profilé 2 dans une position inclinée telle que l'arête 10 de la saillie cunéiforme 11 touche la surface de verre. Le poinçon de formage 5 est alors amené à pivoter autour de l'arête 10 jusqu'à ce que l'arête coupante extérieure 12 touche la surface de la matrice 6. Lors de cette opération de pivotement a lieu le postformage du cordon profilé 2 et de la lèvre 3, et la partie excédentaire de la masse polymérique refoulée vers l'extérieur lors de cette opération est sectionnée par l'arête coupante 12.

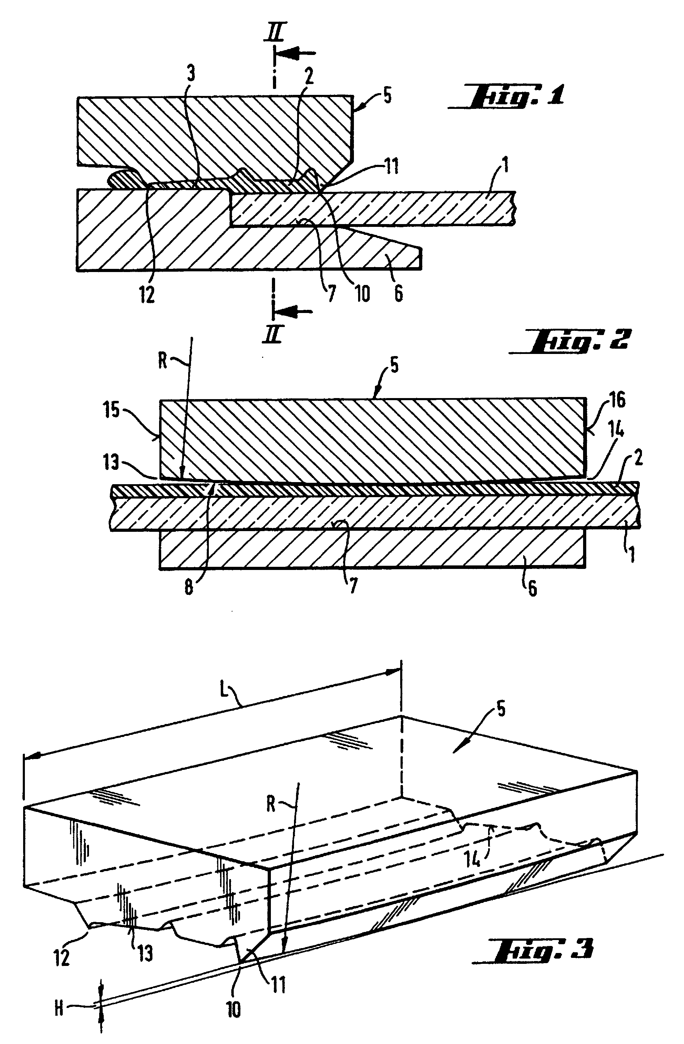

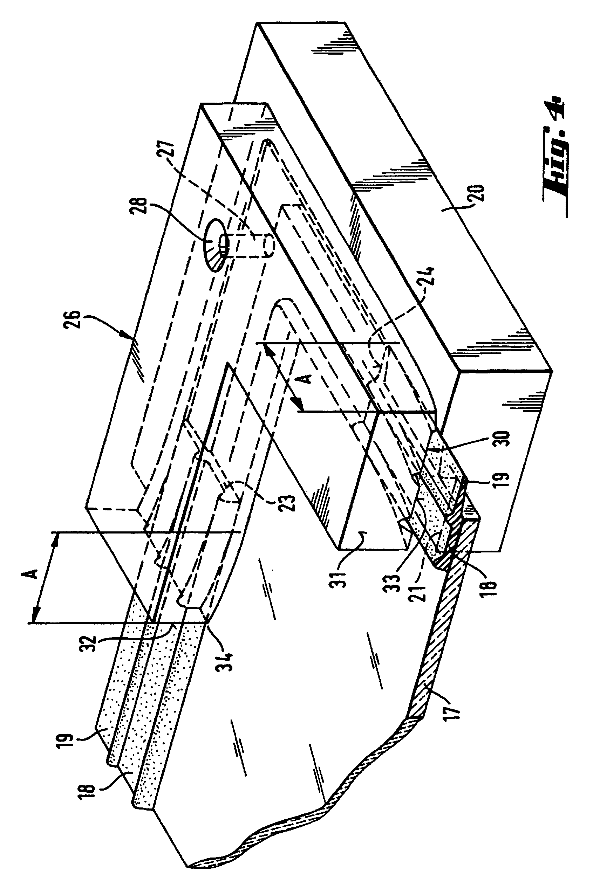

La courbure selon l'invention du poinçon de formage 5 est représentée sur les figures 2 et 3. La surface de formage 8 présente, dans sa globalité, une légère courbure cylindrique. L'importance de la courbure est, de préférence, choisie telle que le rayon R au niveau de l'arête 10 soit de 100 à 400 cm, et en particulier de 200 à 350 cm. Dans le cas d'une longueur L du poinçon de formage de par exemple 6 à 10 cm, cela signifie que la différence de hauteur H entre la ligne de section transversale médiane la plus basse de la surface de formage 8 et les arêtes 13, 14 au niveau des deux faces d'about 15, 16 du poinçon de formage est de 0,1 à 1 mm et de préférence de 0,2 à 0,8 mm. Dans ce cas, on est assuré que, comme il apparaît en particulier sur la figure 2, les arêtes 13, 14 se trouvent légèrement au-dessus de la surface du cordon profilé 2. Des résultats optimaux sont obtenus dans le cas des profilés en forme de cadre habituels au moyen de ces dimensions géométriques.

Une forme de réalisation d'un dispositif selon l'invention, qui convient pour l'achèvement ultérieur d'un profilé en forme de cadre 18 extrudé sur un vitrage 17 dans la zone d'un coin vif à angle droit du vitrage, est représentée sur la figure 4. Le vitrage 17 est à nouveau inséré dans une plaque de formage inférieure 20, qui est pourvue d'un évidement 21. L'évidement 21 correspond au contour du bord du vitrage et à la forme inférieure de la lèvre 19.

Le profilé en forme de cadre 18, qui peut par exemple aussi être constitué d'un profilé en forme de cadre en un système à réaction durcissant, a été mécaniquement enlevé dans la zone de coin, en ayant été sectionné au niveau des surfaces de séparation 23, 24 et arraché de la surface de verre.

Le poinçon de formage 26 est, dans ce cas, conçu comme un moule à injection, dans lequel l'espace creux limité par la surface de formage proprement dite est pourvu, via une forure 27, d'un orifice d'injection 28, par lequel le polymère est injecté dans l'espace creux de moulage via un ajutage d'injection correspondant.

Les deux branches du poinçon de formage 26 présentent chacune dans leur partie d'extrémité une courbure selon l'invention sur une longueur A. La longueur A correspond environ à la longueur de la partie du profilé en forme de cadre 18 couverte par le poinçon de formage. Le rayon de courbure de la surface de formage profilée 30 est à nouveau choisi tel que les arêtes 33, 34 de la surface de formage 30 au niveau des faces d'about 31, 32 du poinçon de formage se trouvent, lorsque le moule est fermé, dans tous les cas légèrement au-dessus de la surface du profilé en forme de cadre 18.

## Revendications

1. Poinçon de formage pour le postformage d'un cordon profilé en polymère extrudé sur un objet, **caractérisé en ce que** la surface de formage (8; 30) du poinçon de formage (5; 26) est recourbée dans les zones d'extrémité latérales dans le sens de la longueur du cordon profilé.

2. Poinçon de formage suivant la revendication 1, **caractérisé en ce que** l'importance de la courbure dans les zones recourbées du poinçon de formage (5) est choisie telle que la différence de hauteur entre la partie médiane la plus basse de la surface de formage et les arêtes (13, 14) de la surface de formage au niveau des faces d'about (15, 16) du poinçon de formage est de 0,1 à 1 mm.

3. Poinçon de formage suivant la revendication 1 ou 2, **caractérisé en ce que** le poinçon de formage (5) est destiné au postformage de la transition entre le début et la fin d'un cordon profilé extrudé sur un objet le long d'un bord de celui-ci et que la surface de formage est pourvue, sur toute la longueur (L) du poinçon de formage, d'une courbure constante selon un rayon (R).

4. Dispositif suivant la revendication 1 ou 2, **caractérisé en ce que** le poinçon de formage (26) est destiné au postformage d'un cordon profilé (18) en forme de cadre extrudé dans la zone d'un coin de l'objet, et que la surface de formage (30) est plane dans la zone comprise entre les faces d'extrémité (23, 24) du cordon profilé (18).

5. Dispositif suivant la revendication 1 ou 2, **caractérisé en ce que** le poinçon de formage (5) est un poinçon de formage pouvant être chauffé pour le formage par compression d'un profilé en forme de cadre (2) en polymère thermoplastique.

6. Dispositif suivant la revendication 1 ou 2, **caractérisé en ce que** le poinçon de formage (26) est conçu comme un moule à injection comportant un orifice d'injection (28).

7. Utilisation d'un dispositif suivant l'une quelconque des revendications 1 à 6, pour le postformage d'un cordon profilé (2; 18) extrudé sur un vitrage (1; 17) et comportant une lèvre d'étanchéité faisant saillie (3; 19).

8. Procédé de postformage d'un cordon profilé en polymère extrudé sur un objet, **caractérisé en ce que** l'on applique sur le cordon un poinçon de formage selon l'une quelconque des revendications 1 à 6.

9. Procédé selon la revendication 8, **caractérisé en ce que** le cordon profilé étant extrudé à partir d'un système polymère à réaction, le postformage se produit directement à la suite de l'opération d'extrusion avant le durcissement du cordon extrudé.

10. Procédé selon la revendication 8, **caractérisé en ce que** le cordon profilé étant extrudé à partir d'un système polymère thermoplastique, on applique sur le cordon un poinçon de formage chauffé.

11. Procédé selon l'une quelconque des revendications 8 à 10, **caractérisé en ce que** l'on applique le poinçon de formage sur la zone de transition entre le début et la fin du cordon profilé extrudé.

12. Procédé selon l'une quelconque des revendications 8 à 11, **caractérisé en ce que** l'on applique sur le cordon un poinçon de formage (26) selon la revendication 6, et **en ce que** l'on injecte un polymère dans l'orifice d'injection.

## Patentansprüche

1. Formstempel zum Nachformen eines an einen Gegenstand anextrudierten Profilstrangs aus einem Polymer, **dadurch gekennzeichnet, dass** die Formfläche(8; 30) des Formstempels (5; 26) in Längsrichtung des Profilstrangs in den seitlichen Endbereichen zurückgebogen ist.

2. Formstempel nach Anspruch 1, **dadurch gekennzeichnet, dass** das Ausmaß der Biegung in den gebogenen Bereichen des Formstempels (5) so gewählt ist, dass die Höhendifferenz zwischen dem mittleren tiefsten Abschnitt der Formfläche und den Kanten (13, 14) der Formfläche an den Stimseiten (15, 16) des Formstempels 0,1 bis 1 mm beträgt.

3. Formstempel nach Anspruch 1 oder 2, **dadurch gekennzeichnet, dass** der Formstempel (5) zum Nachformen des Übergangs zwischen Anfang und Ende eines entlang einer Kante des Gegenstandes an diesen anextrudierten Profilstrangs bestimmt ist, und dass die Formfläche über die gesamte Längsausdehnung (L) des Formstempels mit gleichbleibender Biegung entsprechend einem Radius (R) versehen ist.

4. Vorrichtung nach Anspruch 1 oder 2, **dadurch gekennzeichnet, dass** der Formstempel (26) zum Nachformen eines anextrudierten rahmenförmigen Profilstrangs (18) im Bereich einer Ecke des Gegenstandes bestimmt ist, und dass die Formfläche (30) im Bereich zwischen den Endflächen (23, 24) des Profilstrangs (18) eben verläuft.

5. Vorrichtung nach Anspruch 1 oder 2, **dadurch gekennzeichnet, dass** der Formstempel (5) ein beheizbarer Formstempel zum Pressformen eines Rahmenprofils (2) aus einem thermoplastischen Polymer ist.

6. Vorrichtung nach Anspruch 1 oder 2, **dadurch gekennzeichnet, dass** der Formstempel (26) als Spritzgießform mit einer Einspritzöffnung (28) ausgebildet ist.

7. Anwendung einer Vorrichtung nach einem der Ansprüche 1 bis 6 zum Nachformen eines mit einer überstehenden Dichtlippe (3; 19) versehenen, an eine Glasscheibe (1; 17) anextrudierten Profilstrangs (2; 18).

8. Verfahren zum Nachformen eines an einen Gegenstand anextrudierten Profilstrangs aus einem Polymer, **dadurch gekennzeichnet, dass** auf den Profilstrang ein Formstempel nach einem der Ansprüche 1 bis 6 aufgedrückt wird.

9. Verfahren nach Anspruch 8, **dadurch gekennzeichnet, dass** der Profilstrang aus einem Reaktions-Polymersystem extrudiert wird und sich das Nachformen direkt nach dem Extrusionsvorgang vor dem Aushärten des Profilstrangs ereignet.

10. Verfahren nach Anspruch 8, **dadurch gekennzeichnet, dass** der Profilstrang aus einem thermoplastischen Polymersystem extrudiert wird und auf den Profilstrang ein beheizter Formstempel aufgedrückt wird.

11. Verfahren nach einem der Ansprüche 8 bis 10, **dadurch gekennzeichnet, dass** der Formstempel auf die Übergangszone zwischen Anfang und Ende des extrudierten Profilstrangs gedrückt wird.

12. Verfahren nach einem der Ansprüche 8 bis 11, **dadurch gekennzeichnet, dass** ein Formstempel (26) nach Anspruch 6 auf den Profilstrang gedrückt wird und dass ein Polymer in die Einspritzöffnung eingespritzt wird.

## Claims

1. Forming stamp for the postforming of a profiled, extruded polymer strand on an object, **characterized in that** the forming surface (8; 30) of the forming stamp (5; 26) is bent in the lateral end zones in the lengthwise direction of the profiled strand.

2. Forming stamp according to claim 1, **characterized in that** the extent of the curvature in the bent zones of the forming stamp (5) is chosen in such a way that the height difference between the lowest median portion of the forming surface and the edges (13, 14) of the forming surface level with the abutment faces (15, 16) of the forming stamp is 0.1 to 1 mm.

3. Forming stamp according to claim 1 or 2, **characterized in that** the forming stamp (5) is used for the postforming of the transition between the start and finish of a profiled strand extruded on an object along one edge thereof and that the forming surface is provided, over the entire forming stamp length (L), with a constant curvature in accordance with a radius (R).

4. Device according to claim 1 or 2, **characterized in that** the forming stamp (26) is used for the postforming of a profiled strand shaped like a frame extruded in the corner zone of the object and that the forming surface (30) is planar in the zone between the end faces (23, 24) of the profiled strand (18).

5. Device according to claim 1 or 2, **characterized in that** the forming stamp (5) can be heated for the forming, by compression, of a thermoplastic polymer, frame-shaped profile (2).

6. Device according to claim 1 or 2, **characterized in that** the forming stamp (26) is designed as an injection mould incorporating an injection orifice (28).

7. Use of a device according to any one of the claims 1 to 6 for the postforming of a profiled strand (2; 28) extruded on a glazing (1; 17) and having a projecting sealing lip (3; 19).

8. Process for the postforming of a profiled, extruded polymer strand on an object, **characterized in that** one applies on the strand a forming stamp according to any one of claims 1 to 6.

9. Process according to claim 8, **characterized in that**, the profiled strand being extruded from a reactive polymer system, the postforming is carried out directly after the extrusion step before the setting of the extruded strand.

10. Process according to claim 8, **characterized in that**, the profiled strand being extruded from a thermoplastic polymer system, one applies on the strand a heated forming stamp.

11. Process according to any one of claims 8 to 10, **characterized in that** one applies the forming stamp on the transition zone between the start and finish of the extruded profiled strand.

12. Process according to any one of claims 8 to 11, **characterized in that** one applies on the strand a forming stamp (26) according to claim 6, and **in that** one injects a polymer through the injection orifice.
